# EUROPÄISCHE PATENTSCHRIFT

(11) **EP 1 368 561 B1**
(45) Veröffentlichungstag und Bekanntmachung des Hinweises auf die Patenterteilung: **18.07.2007**
(21) Anmeldenummer: 02714066.4
(22) Anmeldetag: 26.02.2002
(51) Int. Cl.: F02D 35/00, F02D 21/08

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF POUR COMMANDER UN MOTEUR A COMBUSTION INTERNE

(30) Priorität: 03.03.2001 DE 10110340
(43) Veröffentlichungstag der Anmeldung: 10.12.2003
(73) Patentinhaber: ROBERT BOSCH GMBH, 70442 Stuttgart (DE)
(72) Erfinder: PLOTE, Holger, A-4017 Linz (AT); KRAUTTER, Andreas, 71711 Steinheim (DE); WALTER, Michael, 70806 Kornwestheim (DE); SOJKA, Juergen, 70839 Gerlingen (DE)
(86) Internationale Anmeldenummer: PCT/DE2002/000701
(87) Internationale Veröffentlichungsnummer: WO 2002/070883

(56) Entgegenhaltungen:
- EP-A- 1 020 626
- WO-A-01/55575
- WO-A-97/45633
- DE-A- 4 238 068
- US-A- 6 067 800

## Beschreibung

### Stand der Technik

Die Erfindung betrifft ein Verfahren und eine Vorrichtung zur Steuerung einer Brennkraftmaschine.

Verfahren und Vorrichtungen zur Steuerung einer Brennkraftmaschine sind bekannt. Häufig werden Brennkraftmaschinen, insbesondere Dieselbrennkraftmaschinen, mit einen Partikelfilter ausgerüstet. Diese Partikelfilter beeinflussen die Strömung des Abgases, insbesondere den Strömungswiderstand in der Abgasleitung. Dies ist insbesondere bei Systemen problematisch, bei denen die Abgase eine Turbine, beispielsweise bei einem Abgasturbolader antreiben.

Die WO 97/45633 beschreibt ein Verfahren und eine Vorrichtung zur Steuerung eines Turboladers mit variabler Geometrie. Bei der Steuerung des Turboladers wird der Differenzdruck über den Motor gemessen. Dies erfolgt vor dem Hintergrund, dass beim Einsatz des Motors als Motorbremse unter Verwendung einer Abgasklappe der Differenzdruck über den Motor/Lader zur Überwachen ist.

Üblicherweise werden solche Systeme mit Abgasturbolader abhängig vom Betriebszustand der Brennkraftmaschine gesteuert und/oder geregelt. Ändert sich nun der Strömungswiderstand des Partikelfilters bei gleichem Betriebszustand, so werden unterschiedliche Ladeluftmengen bei gleichem Ansteuersignal realisiert. Dadurch ergibt sich eine ungenaue Steuerung der Brennkraftmaschine zugeführten Luftmenge.

### Vorteile der Erfindung

Dadurch, dass in Abhängigkeit vom Beladungszustand des Partikelfilters ein Signal korrigiert wird, das zur Bildung eines Ansteuersignals des Stellers zur Beeinflussung eines steuerbaren Abgasturboladers verwendet wird, können diese Auswirkungen des Partikelfilters auf die Steuerung der Luftmenge minimiert werden.

Bevorzugt wird abhängig von der Größe ein Begrenzungswert für das Ansteuersignal, ein Vorsteuerwert und/oder ein Ansteuerwert eines Stellers korrigiert. Ferner kann auch vorgesehen sein, dass ein Signal korrigiert wird, das zur Bildung einer des Ansteuersignals, des Begrenzungswerts und/oder des Vorsteuerwerts verwendet wird.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Figur 1 ein Blockdiagramm eines Systems zur Steuerung einer Brennkraftmaschine, Figur 2 ein Blockdiagramm einer Abgasrückführregelung und Figur 3 ein Blockdiagramm einer Ladedruckregelung.

### Beschreibung der Ausführungsbeispiele

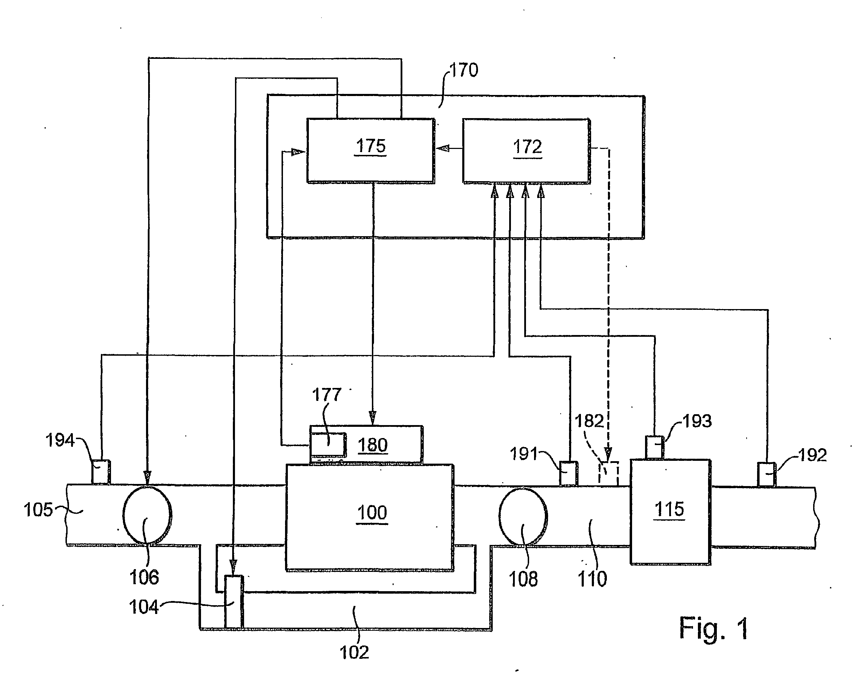

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren können verschiedene Sensoren vorgesehen sein, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigsten ein vierter Sensor 193 liefert Signale, die den Zustand des Abgasnachbehandlungssystems 115 charakterisieren.

Desweiteren kann wenigstens ein Sensor 192 Signale liefern, die den Zustand der Abgase nach dem Abgasnachbehandlungssystem charakterisieren. Vorzugsweise werden Sensoren, die Temperaturwerte und/oder Druckwerte erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Bei der dargestellten Ausführungsform ist in der Ansaugleitung 105 ein Verdichter 106 und in der Abgasleitung 110 eine Turbine 108 angeordnet. Die Turbine wird durch das durchströmende Abgas angetrieben und treibt über eine nicht dargestellte Welle den Verdichter 106 an. Durch geeignete Ansteuerung kann die Luftmenge, die der Verdichter verdichtet, gesteuert werden.

Ferner ist die Leitung 110 für eine Abgasrückführleitung 102 mit der Ansaugleitung 105 verbunden. In der Abgasrückführleitung 102 ist ein Abgasrückführventil 104 angeordnet, das ebenfalls von der Steuereinheit 175 ansteuerbar ist.

Bei der dargestellten Ausführungsform ist sowohl eine Abgasrückführung als auch ein steuerbarer Abgasturbolader vorgesehen. Erfindungsgemäß kann auch lediglich eine Abgasrückführung und lediglich ein gesteuerter Abgasturbolader vorgesehen sein.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur-und/oder verschiedenen Druckwerten zu ermitteln. Desweiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoff und/oder Oxidationsmittel zugeführt werden.

Bei einer Ausgestaltung kann vorgesehen sein, dass ein entsprechendes Signal an die Motorsteuereinheit 175 übermittelt wird und diese eine so genannte Nacheinspritzung durchführt. Mittels der Nacheinspritzung ist es möglich, gezielt Kohlenwasserstoffe in das Abgas einzubringen, die über eine Temperaturerhöhung durch Oxidation in einem Katalysator zur Regeneration des Abgasnachbehandlungssystems 115 beitragen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Zur Reduzierung der Stickoxide von Verbrennungsmotoren ist eine Abgasrückführung vorgesehen. Der Anteil an rückgeführten Abgasen bzw. die Luftmenge, die der Brennkraftmaschine zugeführt wird, muss genau eingestellt werden, da bei einer zu hohen Abgasrückführrate die Russemissionen ansteigen, andererseits bei einer zu geringen Abgasrückführrate die NOₓ-Emissionen zunehmen. Um dies zu erreichen ist üblicherweise eine vom Betriebspunkt abhängige Steuerung und/oder Regelung der Abgasrückführrate vorgesehen.

Vorzugsweise erfolgt dies in Abhängigkeit von der Motordrehzahl und der eingespritzten Kraftstoffmenge. Die ausgehend von obigen Werten ermittelten Sollwerte für die Regelung oder die ermittelten Steuerwerte für die Steuerung können zusätzlich abhängig von weiteren Betriebskenngrößen, wie beispielsweise dem Atmosphärendruck, der Lufttemperatur und/oder der Motortemperatur, korrigiert werden.

Bei der Verwendung eines Abgasnachbehandlungssystems, insbesondere eines Partikelfilters, ändert sich durch die Filterbeladung der Abgasgegendruck und damit auch die Abgasrückführrate bei gleichem Betriebspunkt. Erfindungsgemäß wird eine Größe bestimmt, die diesen Effekt charakterisiert und ausgehend von dieser Größe die Abgasrückführrate bzw. das Ansteuersignal für das Stellglied entsprechend korrigiert. Vorzugsweise wird hierzu ein Drucksignal verwendet, das den Druck vor dem Abgasnachbehandlungssytem 115 charakterisiert.

Ist die Brennkraftmaschine mit einem Luftmassenmesser 194 ausgestattet, so ist eine Regelung der Luftmasse möglich. In diesem Fall können Abweichungen, die auf das Abgasnachbehandlungssystem zurückgehen, ausgeregelt werden. Im gesteuerten Betrieb und/oder bei Systemen ohne Regelung, wird die Veränderung nicht erfasst, in diesen Fällen ist eine Korrektur der Stellgröße notwendig.

Durch die Verwendung des Drucksignals, das üblicherweise zur Steuerung des Abgasnachbehandlungssystems bereits erfasst wird, wird erfindungsgemäß eine Korrektur der Abgasrückführung vorgenommen. Diese Vorgehensweise ist besonders vorteilhaft, da keine zusätzlichen Komponenten, wie beispielsweise .Sensoren, notwendig sind. Die verwendeten Sensoren sind bereits zur Steuerung und/oder Überwachung des Abgasnachbehandlungssystems vorgesehen.

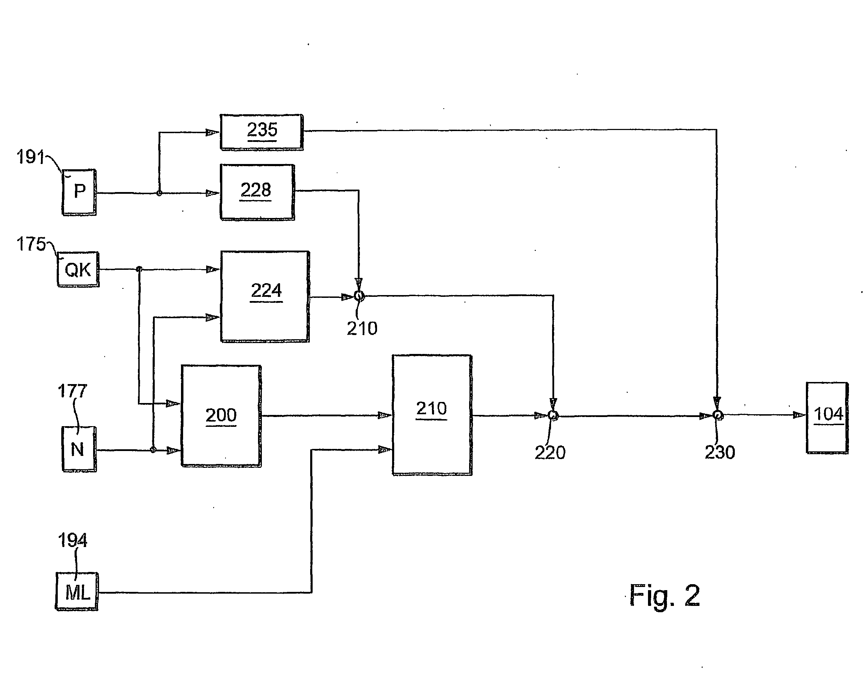

Eine Ausführungsform einer solchen Korrektur des Ansteuersignals für einen Steller 104 eines Abgasrückführsystems ist in Figur 2 detaillierter dargestellt. Bereits in Figur 1 beschriebene Elemente sind mit entsprechenden Bezugszeichen bezeichnet.

Einer Sollwertvorgabe 200 werden verschiedene Größen, die den Betriebszustand der Brennkraftmaschine charakterisieren zugeführt. In der dargestellten Ausführungsform ist dies die Drehzahl N, die mittels des Sensors 177 erfasst wird, und die eingespritzte Kraftstoffmenge QK, die von der Motorsteuereinheit 175 bereitgestellt wird. Neben diesen Größen können auch noch weitere Größen berücksichtigt werden. Anstelle der angegebenen Größen können auch Ersatzgrößen, die diese Größen charakterisieren, verwendet werden. So kann beispielsweise anstelle der Kraftstoffmenge die Ansteuerdauer eines Magnetventils verwendet werden, das die Kraftstoffzumessung bestimmt.

Das Ausgangssignal der Sollwertvorgabe gelangt zu einem Regler 210, dem ferner das Ausgangssignal des Sensors 194 zugeleitet wird. Das Ausgangssignal ML des Sensors 194 charakterisiert die Frischluftmenge, die der Brennkraftmaschine zugeleitet wird. Das Ausgangssignal des Reglers 210 gelangt über einen ersten Verknüpfungspunkt 220 und einen zweiten Verknüpfungspunkt 230,zu einem Steller 104. Am ersten Verknüpfungspunkt liegt ferner das Ausgangssignal eines dritten Verknüpfungspunktes 226 an. Dem dritten Verknüpfungspunkt 226 wird das Ausgangssignal einer Vorsteuerung 224 zugeleitet, dem ebenfalls verschiedene Signale bezüglich des Betriebszustandes der Brennkraftmaschine zugeführt werden. Am zweiten Eingang des Verknüpfungspunktes 226 liegt das Ausgangssignal einer ersten Druckkorrektur 228 an. Am zweiten Eingang des Verknüpfungspunktes 230 liegt das Ausgangssignal einer zweiten Druckkorrektur 235 an. Der Druckkorrektur 228 und der Druckkorrektur 235 wird das Ausgangssignal P des Drucksensors 191 zugeleitet, der ein Signal bereitstellt, das den Druck in der Abgasleitung zwischen der Brennkraftmaschine und dem Abgasnachbehandlungssystem charakterisiert.

Diese Einrichtung arbeitet nun wie folgt. Ausgehend vom Betriebszustand der Brennkraftmaschine gibt die Sollwertvorgabe 200 einen Sollwert für die Luftmenge, die der Brennkraftmaschine zugeführt werden soll vor. Der Regler 210 vergleicht diesen Wert mit der gemessenen Luftmenge ML und bestimmt ausgehend von der Abweichung der beiden Werte ein Ansteuersignal zur Ansteuerung des Stellers 104. Üblicherweise ist eine Vorsteuerung vorgesehen, die ausgehend von dem Betriebszustand der Brennkraftmaschine ein Vorsteuerwert vorgibt, der im Verknüpfungspunkt 220 zum Ansteuersignal hinzuaddiert wird.

Die Erfassung der Luftmenge ist relativ träge und reagiert langsam auf Änderungen der Stellgröße und/oder der Betriebszustände. Deshalb ist eine Vorsteuerung vorgesehen, die ein entsprechend dynamisch schnelles Signal bereitstellt, das schnell auf Änderungen der Betriebszustände reagiert und eine entsprechende Verstellung des Stellgliedes bewirkt.

Bei einer vereinfachten Ausführungsform kann die Vorsteuerung 224 weggelassen bzw. bei einer noch einfacheren Ausführungsform kann auch lediglich eine Steuerung der Abgasrückführung vorgesehen sein. Dies bedeutet, dass die Sollwertvorgabe 200 unmittelbar das Ansteuersignal für den Steller 104 vorgibt.

Neben dem Steller 104 können noch weitere Stellelemente, die die Abgasrückführrate beeinflussen, vorgesehen sein.

Ausgehend von dem Abgasdruck nach der Brennkraftmaschine und/oder vor dem Abgasnachbehandlungssystem bestimmt die Druckkorrektur 228 und/oder die Druckkorrektur 235 Korrekturwerte, um die Druckabhängigkeit der Abgasrückführrate auszugleichen. D. h. die Korrekturwerte sind so bemessen, dass sich auch bei unterschiedlichen Drücken nach der Brennkraftmaschine bei gleichen Betriebszuständen die gleiche Abgasrückführrate einstellt.

Dies bedeutet beispielsweise, dass bei einem beladenen Partikelfilter das Abgasrückführventil 104 weniger geöffnet wird, als bei einem unbeladenen Partikelfilter.

Üblicherweise sind Brennkraftmaschinen mit sogenannten Abgasturboladern ausgestattet, mit denen es möglich ist, der Brennkraftmaschine eine erhöhte Luftmenge zuzuführen. Zur Steuerung der Turbolader ist üblicherweise vorgesehen, dass ein sogenannter Waste-Gate-Lader verwendet wird, der ein Bypassventil aufweist, mit dem ein Teil der Abgase an der Turbine 108 vorbeigeleitet werden kann. Desweiteren sind sogenannte VTG-Lader mit variabel verstellbarer Geometrie bekannt, bei denen der Wirkungsgrad der Turbine veränderbar ist. Diese Verstellmöglichkeiten werden dazu ausgenutzt, den Ladedruck, d. h. die zugeführte Luftmenge an den Betriebszustand der Brennkraftmaschine anzupassen. Desweiteren ist eine optimale Anpassung der Leistung des Laders an die Brennkraftmaschine möglich.

Üblicherweise wird der gewünschte Ladedruck PL bzw. das Ansteuersignal für den Steller abhängig vom Betriebszustand der Brennkraftmaschine, wie der Drehzahl und der eingespritzten Kraftstoffmenge, sowie weiteren Größen wie der Motortemperatur, der Kühlwassertemperatur, des Atmosphärendruckes und/oder der Lufttemperatur vorgegeben. Sowohl bei einer Steuerung des Laders, bei der das Tastverhältnis ausgehend von dem Betriebszustand vorgebbar ist, als auch bei einer Regelung des Laders, bei der ausgehend von den Betriebskenngrößen ein Sollwert für den Ladedruck vorgebbar ist, und das Tastverhältnis so vorgegeben wird, dass der Soll- und Istwert des Ladedrucks übereinstimmen, erfolgt eine Begrenzung des Ansteuersignals in Abhängigkeit vom Betriebszustand der Brennkraftmaschine, wobei insbesondere die Drehzahl und die Einspritzmenge berücksichtigt werden. Diese Werte werden so vorgegeben, dass der Lader eine maximal mögliche Höchstdrehzahl nicht überschreitet.

Erfindungsgemäß ist vorgesehen, dass hierbei die Beladung des Partikelfilters und damit die Reduzierung des zur Verfügung stehenden Druckgefälles über der Turbine berücksichtigt wird. Mit steigendem Abgasgegendruck durch einen mit Partikel beladenen Filter verringert sich die dem Turbolader zur Verfügung stehende Abgasenergie. Im Falle eines Ladedruckreglers führt dies zu einer Korrektur des Tastverhältnisses, weil dieses so lange angepasst wird, bis der gewünschte Ladedrucksollwert erreicht wird. Durch die übliche Begrenzung des zulässigen Tastverhältnisses, die üblicherweise nur abhängig vom Betriebspunkt oder abhängig vom Kraftstoffverbrauch vorgebbar ist, kommt es zu einer unnötig frühen Begrenzung des Tastverhältnisses. Dies liegt daran, dass bei leerem Filter die hohe Druckdifferenz eine Überdrehzahl zur Folge hätte, aufgrund der geringen Druckdifferenz dieses Problem aber nicht besteht. Um den gewünschten Druckaufbau auf der Verdichterseite auch bei geringer Druckdifferenz auf der Turbinenseite sicherzustellen, wird die Begrenzung erfindungsgemäß zusätzlich in Abhängigkeit des Abgasgegendrucks korrigiert, um die gesamte zur Verfügung stehende Abgasenergie auszunutzen. Entsprechend wird auch bei einer Ladedrucksteuerung verfahren, wenn das Tastverhältnis unmittelbar ausgehend von den Betriebskenngrößen vorgegeben wird.

Erfindungsgemäß wird der Abgasgegendruck zur Korrektur des Tastverhältnisses und/oder zur Korrektur der Begrenzung des Tastverhältnisses verwendet. Vorteil dieser Vorgehensweise ist die Ausnutzung eines größeren Verstellbereichs und einer Anpassung des Verstellbereichs an die real auftretenden Druckverhältnisse.

Tritt ein hoher Abgasgegendruck durch eine entsprechende Beladung des Partikelfilters auf, so kann das begrenzende Tastverhältnis durch die Berücksichtigung des Drucks als zusätzliche Eingangsgröße so korrigiert werden, dass ein Aufbau des gewünschten Ladedrucks möglich ist. Die Laderdrehzahl erreicht dabei keine kritischen Werte, weil die Erweiterung des Stellbereichs nur den Rückgang der nutzbaren Abgasenergie durch das verringerte Druckverhältnis über den Lader kompensiert.

Bei der Ladedrucksteuerung wird mit dem Abgasgegendruck als zusätzliche Eingangsgröße ebenfalls eine verbesserte Einstellung des gewünschten Ladedrucks erreicht, weil auch hier die zur Verfügung stehende Abgasenergie berücksichtigt werden kann.

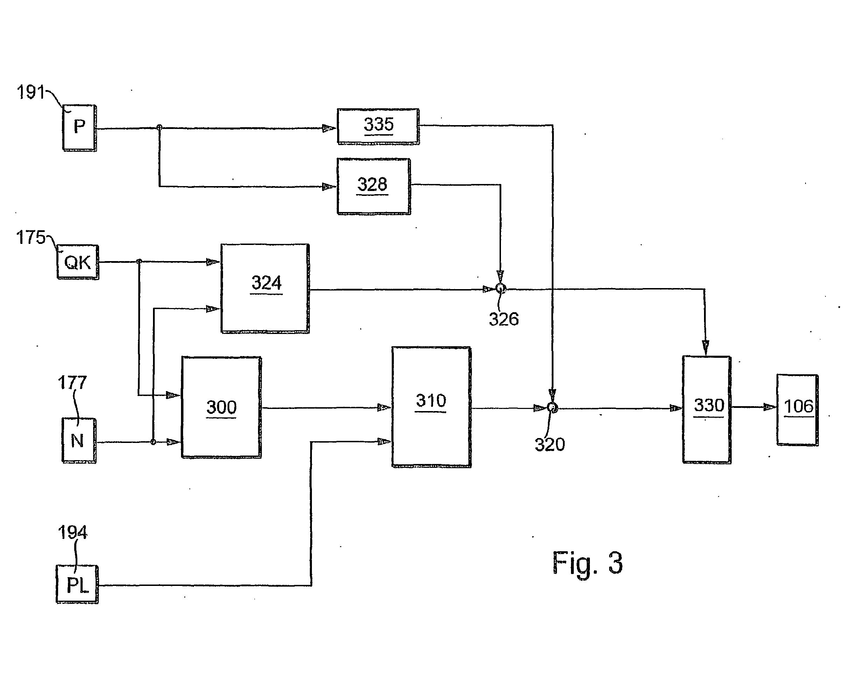

Eine entsprechende Vorgehensweise ist in Figur 3 dargestellt. Bereits in Figur 1 beschriebene Elemente sind mit entsprechenden Bezugszeichen bezeichnet.

Einer Sollwertvorgabe 300 werden verschiedene Größen, die den Betriebszustand der Brennkraftmaschine charakterisieren zugeführt. In der dargestellten Ausführungsform ist dies die Drehzahl N, die mittels des Sensors 177 erfasst wird, und die eingespritzte Kraftstoffmenge QK, die von der Motorsteuereinheit 175 bereitgestellt wird. Neben diesen Größen können auch noch weitere Größen berücksichtigt werden. Anstelle der angegebenen Größen können auch Ersatzgrößen, die diese Größen charakterisieren, verwendet werden. So kann beispielsweise anstelle der Kraftstoffmenge die Ansteuerdauer eines Magnetventils verwendet werden, das die Kraftstoffzumessung bestimmt.

Das Ausgangssignal der Sollwertvorgabe gelangt zu einem Regler 310, dem ferner das Ausgangssignal des Sensors 194 zugeleitet wird. Das Ausgangssignal PL des Sensors 194 charakterisiert den Druck der Luft, die der Brennkraftmaschine zugeleitet wird. Das Ausgangssignal des Reglers 310 gelangt über einen ersten Verknüpfungspunkt 220 zu einer Maximalauswahl 330.

Einer Begrenzung 324 werden ebenfalls die Größen QK und N bezüglich des Betriebszustandes der Brennkraftmaschine zugeleitet. Das Ausgangssignal der Begrenzung gelangt über ein Verknüpfungspunkt 326 zu der Maximalauswahl 330. Am zweiten Eingang der Maximalauswahl liegt das Ausgangssignal des Verknüpfungspunktes 320, an dem zum einen das Ausgangssignal des Reglers 310 und zum anderen das Ausgangssignal der Druckkorrektur 335 anliegt. Am zweiten Eingang des Verknüpfungspunktes 326 liegt das Ausgangssignal der Druckkorrektur 328 an. Mit dem Ausgangssignal der Maximalauswahl 330 wird der Steller 106 beaufschlagt.

Diese Einrichtung arbeitet wie folgt. Ausgehend von dem Betriebszustand der Brennkraftmaschinen, die insbesondere durch die Drehzahl N und die eingespritzte Kraftstoffmenge QK charakterisiert wird, bestimmt die Sollwertvorgabe 300 einen Sollwert für den Ladedruck. Der Regler 310 vergleicht diesen mit dem Istwert PL. Ausgehend von diesem Vergleich berechnet der Regler ein Ansteuersignal für den Steller 106.

Dieses Ansteuersignal wird von der Maximalauswahl 330 auf das Ausgangssignal der Begrenzung 324 begrenzt. Die Begrenzung gibt den Maximalwert des Ansteuersignals ausgehend vom Betriebszustand der Brennkraftmaschine vor. Hierzu wird insbesondere die einzuspritzende Kraftstoffmenge und/oder die Drehzahl verwendet. Erfindungsgemäß wird sowohl das Ausgangssignal der Begrenzung 324 und das Ausgangssignal des Reglers 310 abhängig vom Druck korrigiert. Hierzu bestimmen die Druckkorrektur 328 und die Druckkorrektur 335 entsprechende Werte.

Bei einer vereinfachten Ausführungsform kann auch vorgesehen sein, dass lediglich eine Steuerung vorgesehen ist, bei der die Sollwertvorgabe 300 unmittelbar das Ansteuersignal, das der Maximalauswahl 330 zugeleitet wird, vorgibt.

Bei einer weiteren Ausführungsform kann vorgesehen sein, dass die Begrenzung 324 sowohl einen maximal möglichen Wert als auch einen minimal möglichen Wert für das Ansteuersignal vorgibt und die Maximalauswahl 330 als Maximalauswahl und Minimalauswahl ausgebildet ist. Desweiteren kann vorgesehen sein, dass der Begrenzungswert abhängig vom Kraftstoffverbrauch vorgebbar ist.

## Patentansprüche

1. Verfahren zur Steuerung einer Brennkraftmaschine, wobei die Brennkraftmaschine einen Partikelfilter umfasst, bei dem die Steuerung und/oder Regelung der Luftmenge, die der Brennkraftmaschine zugeführt wird, abhängig vom Beladungszustand des Partikelfilters derart erfolgt, dass die gesamte zur Verfügung stehende Abgasenergie ausgenutzt wird, **dadurch gekennzeichnet, dass** in Abhängigkeit vom Beladungszustand des Partikelfilters ein Signal korrigiert wird, das zur Bildung eines Ansteuersignals des Stellers zur Beeinflussung eines steuerbaren Abgasturboladers verwendet wird.

2. Verfahren nach einem der vorhergehenden Ansprüche, **dadurch gekennzeichnet, dass** abhängig vom Beladungszustand des Partikelfilters ein Begrenzungswert für das Ansteuersignal des Stellers zur Beeinflussung des steuerbaren Abgasturboladers korrigiert wird.

3. Verfahren nach einem der vorhergehenden Ansprüche, **dadurch gekennzeichnet, dass** abhängig vom Beladungszustand des Partikelfilters ein Vorsteuerwert zur Bildung des Ansteuersignals des Stellers zur Beeinflussung des steuerbaren Abgasturboladers korrigiert wird.

4. Vorrichtung zur Steuerung einer Brennkraftmaschine, wobei die Brennkraftmaschine einen Partikelfilter umfasst, bei dem die Steuerung und/oder Regelung der Luftmenge, die der Brennkraftmaschine zugeführt wird, abhängig vom Beladungszustand des Partikelfilters derart erfolgt, dass die gesamte zur Verfügung stehende Abgasenergie ausgenutzt wird, **dadurch gekennzeichnet, dass** Mittel vorgesehen sind, die in Abhängigkeit vom Beladungszustand des Partikelfilters ein Signal korrigieren, das zur Bildung eines Ansteuersignals des Stellers zur Beeinflussung eines steuerbaren Abgasturboladers verwendet wird.

5. Computerprogramm mit Programmcode-Mitteln, um alle Schritte von jedem beliebigen der Ansprüche 1 bis 3 durchzuführen, wenn das Programm auf einem Computer, insbesondere einem Steuergerät für eine Brennkraftmaschine, ausgeführt wird.

6. Computerprogrammprodukt mit Programmcode-Mitteln, die auf einem computerlesbaren Datenträger gespeichert sind, um das Verfahren nach jedem beliebigen der Ansprüche 1 bis 3 durchzuführen, wenn das Programmprodukt auf einem Computer, insbesondere einem Steuergerät für eine Brennkraftmaschine, ausgeführt wird.

## Claims

1. Method for controlling an internal combustion engine, wherein the internal combustion engine comprises a particle filter in which the open-loop and/or closed-loop control of the quantity of air which is fed to the internal combustion engine is carried out as a function of the charge state of the particle filter in such a way that all the available exhaust gas energy is utilized, **characterized in that** a signal which is used to form an actuation signal of the actuator for influencing a controllable exhaust gas turbocharger is corrected as a function of the charge state of the particle filter.

2. Method according to one of the preceding claims, **characterized in that** a limiting value for the actuation signal of the actuator for influencing the controllable exhaust gas turbocharger is corrected as a function of the charge state of the particle filter.

3. Method according to one of the preceding claims, **characterized in that** a pilot control value for forming the actuation signal of the actuator for influencing the controllable exhaust gas turbocharger is corrected as a function of the charge state of the particle filter.

4. Device for controlling an internal combustion engine, wherein the internal combustion engine comprises a particle filter in which the open-loop and/or closed-loop control of the quantity of air which is fed to the internal combustion engine is carried out as a function of the charge state of the particle filter in such a way that all the available exhaust gas energy is utilized, **characterized in that** means are provided which, as a function of the charge state of the particle filter, correct a signal which is used to form an actuation signal of the actuator for influencing a controllable exhaust gas turbocharger.

5. Computer program having program code means for carrying out all the steps from any of Claims 1 to 3 if the program is run on a computer, in particular a control device for an internal combustion engine.

6. Computer program product having program code means which are stored on a computer-readable data carrier in order to carry out the method according to any of Claims 1 to 3, if the program is run on a computer, in particular a control device for an internal combustion engine.

## Revendications

1. Procédé pour commander un moteur à combustion interne équipé d'un filtre à particules, selon lequel la commande et/ou la régulation du débit d'air amené au moteur s'effectuent en fonction de l'état de charge du filtre à particules de manière à utiliser toute l'énergie disponible des gaz d'échappement,
**caractérisé en ce qu'**
en fonction de l'état de charge du filtre à particules, on corrige un signal utilisé pour former un signal de commande, de l'actionneur servant à influencer un turbocompresseur commandé, entraîné par les gaz d'échappement.

2. Procédé selon la revendication 1,
**caractérisé en ce qu'**
en fonction de l'état de charge du filtre à particules, on corrige la valeur limite du signal de commande de l'actionneur servant à influencer le turbocompresseur commandé, entraîné par les gaz d'échappement.

3. Procédé selon la revendication 1 ou 2,
**caractérisé en ce qu'**
en fonction de l'état de charge du filtre à particules, on corrige la valeur de précommande servant à former le signal de commande de l'actionneur influençant le turbocompresseur commandé, entraîné par les gaz d'échappement.

4. Dispositif pour commander un moteur à combustion interne comprenant un filtre à particules et dans lequel la commande et/ou la régulation du débit d'air amené au moteur s'effectuent en fonction de l'état de charge du filtre à particules de manière à utiliser toute l'énergie disponible des gaz d'échappement,
**caractérisé par**
des moyens qui corrigent en fonction de l'état de charge du filtre à particules, un signal utilisé pour former un signal de commande de l'actionneur servant à influencer un turbocompresseur commandé, entraîné par les gaz d'échappement.

5. Programme d'ordinateur, ayant des moyens de code de programme pour réaliser toutes les étapes d'une quelconque des revendications 1 à 3, si le programme est effectué sur un ordinateur, notamment un appareil de commande d'un moteur à combustion interne.

6. Produit de programme d'ordinateur avec des moyens de code de programme enregistrés sur un support de données lisible par l'ordinateur, pour réaliser le procédé selon une quelconque des revendications 1 à 3, si le produit de programme est effectué sur un ordinateur, notamment un appareil de commande d'un moteur à combustion interne.
